# EUROPÄISCHE PATENTSCHRIFT

(11) **EP 0 469 286 B1**
(45) Veröffentlichungstag und Bekanntmachung des Hinweises auf die Patenterteilung: **02.03.1994**
(21) Anmeldenummer: 91110414.9
(22) Anmeldetag: 24.06.1991
(51) Int. Cl.: B60J 7/057

(54) **Antriebsvorrichtung für ein verstellbares Teil eines Fahrzeuges**
Drive apparatus for a movable member of a vehicle
Dispositif d'entraînement pour parties mobiles d'un véhicule automobile

(30) Priorität: 10.07.1990 DE 4021973
(43) Veröffentlichungstag der Anmeldung: 05.02.1992
(73) Patentinhaber: Webasto AG Fahrzeugtechnik, D-82131 Stockdorf (DE)
(72) Erfinder: Pohl, Peter, W-8033 Krailling (DE); Gruber, Reinhold, W-8035 Stockdorf (DE)

(56) Entgegenhaltungen:
- DE-A- 3 335 407
- DE-A- 3 823 869

## Beschreibung

Die Erfindung bezieht sich auf eine Antriebsvorrichtung für einen zwischen Endstellungen verstellbaren Deckel eines Fahrzeugdaches, mit einem Elektromotor, der über ein Untersetzungsgetriebe mit einem auf einer Abtriebswelle sitzenden Antriebsritzel verbunden ist, das seinerseits mit dem verstellbaren Teil in Antriebsverbindung steht, sowie mit einer den Motor steuernden Schalteinrichtung zum Stillsetzen des Motors in mindestens einer vorbestimmten Stellung des verstellbaren Teils, wobei zum Betätigen der Schalteinrichtung ein Schaltrad vorgesehen ist, das beim Verstellen des Teils zwischen seinen Endstellungen über ein Exzenterzahnrädergetriebe zu einer Drehbewegung von weniger als 360° veranlaßt wird, und wobei das Exzenterzahnrädergetriebe ein Außenrad mit einer zu einer gemeinsamen Welle von Untersetzungs- und Exzenterzahnrädergetriebe koaxialen Innenverzahnung und ein damit in Kämmeingriff stehendes außenverzahntes Innenrad aufweist, das mindestens einen Zahn weniger als das Außenrad hat und das auf einem mit der Welle drehfest verbundenen Exzenter für eine relative Drehbewegung zwischen Innenrad und Exzenter gelagert ist.

Bei bekannten Antriebsvorrichtungen dieser Art (DE-A- 32 30 065, DE-A- 33 16 653 und DE-A- 33 35 407) ist das Außenrad des Exzenterzahnrädergetriebes mit einem Getriebegehäuseteil fest verbunden, insbesondere an dem Getriebegehäuseteil angeformt.

Bei einer Drehbewegung des Exzenters wird das Innenrad zu einer Umlaufbewegung gegenüber dem Außenrad veranlaßt. Bei dieser Umlaufbewegung wird das Schaltrad über einen Stift mitgenommen, der an dem Innenrad befestigt ist und der in einen Radialschlitz des Außenrades eingreift, um die Umlaufbewegung des Innenrades zuzulassen. Bei einstückiger Verbindung zwischen dem betreffenden Getriebegehäuseteil und dem Außenrad stellt die Kombination von Getriebegehäuseteil und Außenrad ein relativ kostspieliges Präzisionsbauteil dar. Werden das Getriebegehäuseteil und das Außenrad als gesonderte Bauteile gefertigt, wird eine insgesamt vielteilige Antriebsvorrichtung erhalten, deren Montage relativ aufwendig ist.

Bei anderen bekannten Antriebsvorrichtungen für verstellbare Deckel von Fahrzeugdächern (DE-U- 76 29 034 und D-A- 30 30 642) ist an Stelle eines Exzenterzahnrädergetriebes ein Schrittschaltgetriebe vorgesehen. Für die vorliegenden Zwecke geeignete Schrittschaltgetriebe erfordern jedoch teure, hochpräzise Bauteile. Die Getriebe sind toleranzempfindlich. Außerdem kommt es im Betrieb durch einen stoßartigen Zahneingriff zu unerwünschten klackenden Geräuschen.

Der Erfindung liegt die Aufgabe zugrunde, eine geräuscharm arbeitende Antriebsvorrichtung der eingangs genannten Art zu schaffen, die sich aus relativ wenigen und verhältnismäßig einfachen Einzelteilen aufbauen läßt.

Ausgehend von einer Antriebsvorrichtung der eingangs genannten Art wird diese Aufgabe erfindungsgemäß dadurch gelöst, daß das Innenrad an einer Umlaufbewegung gegenüber dem Außenrad gehindert und entlang einer die Achse der Welle vorzugsweise rechtwinklig schneidenden Verstellachse hin- und herverstellbar geführt ist, sowie daß das Außenrad mit dem Schaltrad drehfest verbunden ist.

Die Antriebsvorrichtung nach der Erfindung kommt mit einem vereinfachten Getriebegehäuse aus. Insbesondere ist es nicht notwendig, an einem Getriebegehäuseteil ein Außenrad anzuformen oder ein solches Gehäuseteil mit einem Außenrad fest zu verbinden.

In weiterer Ausgestaltung der Erfindung bildet das Außenrad selbst das Schaltrad.

Zur Führung des Innenrades kann einfach mindestens ein feststehender Führungsbolzen vorgesehen sein, der in eine Radialausnehmung des Innenrades verschiebbar eingreift, wobei der Führungsbolzen zweckmäßig an einem Getriebegehäuseteil angebracht, insbesondere an einem als Gußteil ausgebildeten Getriebegehäuseteil angegossen ist.

Die Radialausnehmung kann radial innerhalb der Verzahnung des Innenrades oder in einem über diese Verzahnung radial nach außen vorspringenden Teil des Innenrades ausgebildet sein und im letztgenannten Fall die Form eines Langlochs oder eines radial nach außen offenen Schlitzes haben.

Zweckmäßig ist die Zahl der Zähne des Außenrades genau um eins größer als die Zahl der Zähne des Innenrades. Dadurch ist sichergestellt, daß unabhängig von der gegenseitigen Winkelausrichtung, mit welcher bei der Montage Innen- und Außenrad zusammengesteckt werden, das Schaltrad die richtige Zuordnung zu der Schalteinrichtung hat.

Das Untersetzungsgetriebe kann vorteilhaft eine von dem Motor angetriebene Schneckenwelle und ein damit kämmendes Schneckenrad aufweisen, das auf der gemeinsamen Welle von Untersetzungs- und Exzenterzahnrädergetriebe sitzt und mit dieser Welle drehfest verbunden ist. Dabei wird die Anzahl der insgesamt erforderlichen Bauteile besonders klein gehalten, wenn der Exzenter an dem Schneckenrad angeformt ist.

Die gemeinsame Welle von Untersetzungs- und Exzenterzahnrädergetriebe kann zugleich die das Antriebsritzel tragende Abtriebswelle bilden. Dadurch kommt die Gesamtanordnung mit besonders wenig Einbauraum aus, und die Anzahl der Einzelteile wird weiter verringert.

Das Schaltrad kann als Nockenrad ausgebildet und mit mehreren in Axialrichtung gegeneinander versetzten Nockenbahnen versehen sein, von denen jede mit jeweils einem Schalter der Schalteinrichtung zusammenwirkt, um beispielsweise den Deckel eines Fahrzeugdaches sowohl in der einen als auch in der anderen Endstellung stillzusetzen.

Das Schaltrad kann aber auch mindestens einen Dauermagneten tragen, der zum Betätigen der Schalteinrichtung mit mindestens einem magnetfeldempfindlichen Sensor, vorzugsweise einem Hall-Sensor, zusammenwirkt.

Vorzugsweise sind das Innen- und das Außenrad aus Werkstoffen mit mindestens näherungsweise gleichen Wärmeausdehnungskoeffizienten gefertigt. Dadurch ist ein einwandfreies Arbeiten der Antriebsvorrichtung innerhalb eines besonders großen Temperaturbereichs gewährleistet.

Die Erfindung ist im folgenden anhand von bevorzugten Ausführungsbeispielen näher erläutert. In den Zeichnungen zeigt:
- Fig. 1: einen schematischen Längsschnitt eines Fahrzeug-Schiebedaches bei in Schließstellung stehendem Deckel,
- Fig. 2: einen Schnitt entsprechend Fig. 1 bei in die Offenstellung gebrachtem Deckel,
- Fig. 3: in größerem Maßstab eine entlang der Schnittlinie III-III der Fig. 4 teilweise aufgeschnittene Ansicht der Antriebsvorrichtung des Fahrzeugdaches nach den Fign. 1 und 2, von unten gesehen,
- Fig. 4: einen Schnitt der Antriebsvorrichtung entlang der Linie IV-IV der Fig. 3,
- Fig. 5: einen Schnitt ähnlich Fig. 4 für eine abgewandelte Ausführungsform der Antriebsvorrichtung,
- Fig. 6: einen Teilschnitt einer weiter abgewandelten Ausführungsform der Antriebsvorrichtung,
- Fig. 7: eine Draufsicht auf eine weitere abgewandelte Ausführungsform der Antriebsvorrichtung,
- Fig. 8: einen Schnitt entlang der Linie VIII-VIII der Fig. 7,
- Fig. 9: eine Draufsicht auf das Innenrad der Anordnung gemäß den Fig. 7 und 8,
- Fig.10: einen Schnitt des Innenrades entlang der Linie X-X der Fig.9, und
- Fig.11: eine Draufsicht auf eine weiter abgewandelte Ausführungsform des Innenrades.

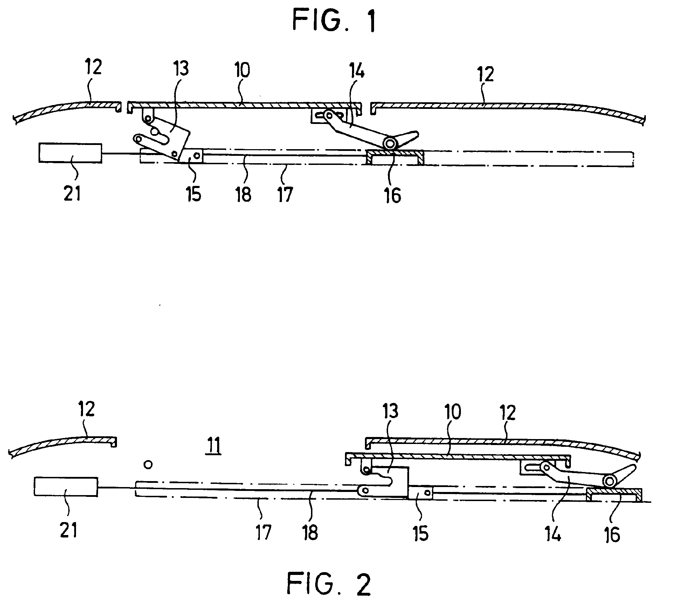

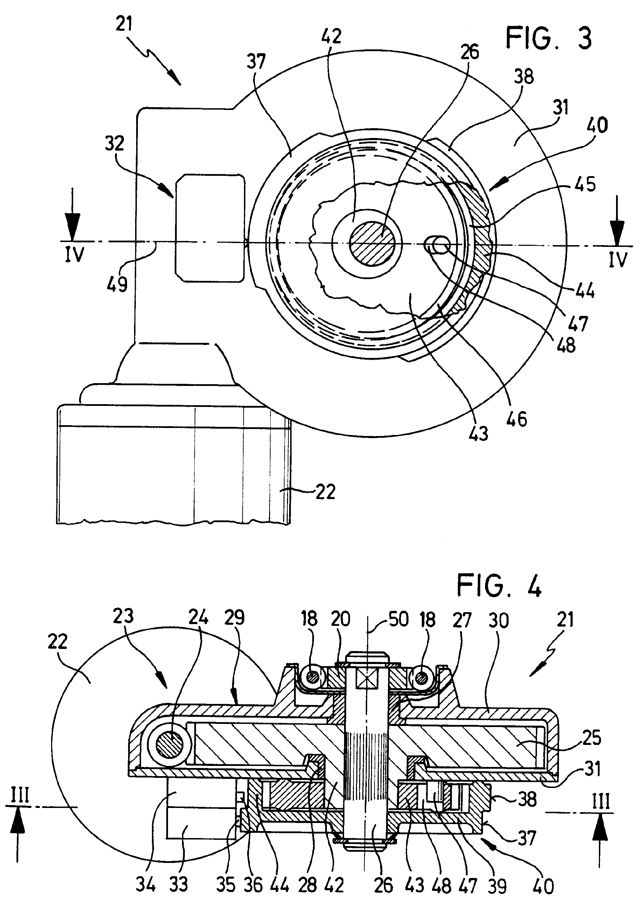

Das in den Fign. 1 und 2 veranschaulichte Fahrzeug-Schiebedach weist einen Deckel 10 auf, der in einer Schließstellung (Fig. 1) eine Dachöffnung 11 verschließt, die in einer festen Dachfläche 12 ausgebildet ist. Der Deckel 10 ist an beiden Seiten auf jeweils einem vorderen Deckelträger 13 und einem hinteren Deckelträger 14 abgestützt. Die Deckelträger 13 und 14 sind an einem vorderen Schlitten 15 bzw. einem hinteren Schlitten 16 angelenkt, die beide in einer dachfesten Längsführung 17 in Fahrzeuglängsrichtung verschiebbar geführt sind. Dabei greift an dem rechten und dem linken hinteren Schlitten 16 jeweils ein Antriebskabel 18, vorzugsweise ein Gewindekabel, an. Die Antriebskabel 18 wirken mit einem Antriebsritzel 20 (Fig. 4) einer insgesamt mit 21 bezeichneten Antriebsvorrichtung zusammen.

Das Antriebsritzel 20 wird von einem Elektromotor 22 über ein Untersetzungsgetriebe 23 angetrieben. Zu dem Untersetzungsgetriebe 23 gehören eine von dem Motor 22 vorzugsweise direkt angetriebene Schneckenwelle 24 und ein mit der Schneckenwelle 24 kämmendes Schneckenrad 25. Das Schneckenrad 25 ist im veranschaulichten Ausführungsbeispiel mit einer Welle 26 drehfest verbunden, die zugleich in drehfester Verbindung mit dem Antriebsritzel 20 steht und damit die Abtriebswelle der Antriebsvorrichtung 21 bildet. Die Welle 26 ist über Lagerbuchsen 27 und 28 in einem insgesamt mit 29 bezeichneten Getriebegehäuse drehbar gelagert, das von einem topfförmigen Getriebegehäuseteil 30 und einem deckelförmigen Getriebegehäuseteil 31 gebildet wird. In dem nicht näher veranschaulichten, beispielsweise in bekannter Weise ausgelegten Speisestromkreis des Motors 22 liegt eine Schalteinrichtung 32 mit zwei übereinander angeordneten Schaltern 33 und 34, deren Betätigungsglieder bei 35 bzw. 36 angedeutet sind. Die Betätigungsglieder 35 und 36 wirken mit jeweils einer von zwei in Axialrichtung gegeneinander versetzten Nockenbahnen 37 bzw. 38 am Außenumfang eines als Nockenrad 39 ausgebildeten Schaltrades zusammen, um den Deckel 10 selbsttätig stillzusetzen, wenn er die eine bzw. die andere Endstellung erreicht hat (Fign. 1 und 2).

Bei einem Übergang des Deckels 10 von der einen in die andere Endstellung führt das Schneckenrad 25 mehrere Umdrehungen aus. Die jeweilige Drehstellung des Schneckenrades 25 ist daher zur eindeutigen Erfassung der Deckelstellung ungeeignet. Um eine solche eindeutige Zuordnung zu erhalten, ist zwischen dem Schneckenrad 25 bzw. der Welle 26 und dem Nockenrad 39 ein insgesamt mit 40 bezeichnetes Exzenterzahnrädergetriebe vorgesehen, das so ausgelegt ist, daß das Nockenrad 39 im Zuge einer Verstellbewegung des Deckels 10 von der einen in die andere Endstellung zu einer Drehbewegung von weniger als 360° veranlaßt wird.

Zu dem Exzenterzahnrädergetriebe gehören die Welle 26, ein Exzenter 42, ein Innenrad 43 und ein Außenrad 44. Der Exzenter 42 ist mit dem Schneckenrad 25 und der Welle 26 drehfest verbunden; bei der veranschaulichten Ausführungsform gemäß Fig. 4 ist der Exzenter 42 an dem Schneckenrad 25 angeformt. Auf dem Exzenter 42 ist das ringförmige Innenrad 43 drehbar gelagert. Das Außenrad 44 ist mit dem Nockenrad 39 drehfest verbunden; im veranschaulichten Ausführungsbeispiel bildet das Außenrad 44 zugleich das Nockenrad 39. Das Außenrad 44 ist auf der Welle 26 drehbar gelagert und mit einer zu der Welle 26 koaxialen Innenverzahnung 45 versehen. Das Innenrad 43 weist eine Außenverzahnung 46 auf, die mit der Innenverzahnung 45 in Kämmeingriff steht und deren Zähnezahl um mindestens Eins und vorzugsweise um genau Eins kleiner als die Zähnezahl der Innenverzahnung 45 des Außenrades 44 ist.

Von der dem Zahnrädergetriebe 40 zugewendeten Außenseite des Getriebegehäuseteils 31 steht ein Führungsbolzen 47 parallel zur Welle 26 vor. Der Führungsbolzen 47 ragt in eine radial innerhalb der Verzahnung 46 ausgebildete Radialausnehmung 48 des Innenrades 43 hinein, und er ist in dieser Ausnehmung 48 verschiebbar geführt. Auf diese Weise wird das Innenrad 43 an einer Umlaufbewegung gegenüber dem Außenrad 44 gehindert. Es kann jedoch eine hin- und hergehende Bewegung entlang einer Verstellachse 49 (Fig. 3) ausführen, welche im veranschaulichten Ausführungsbeispiel die Achse 50 (Fig. 4) der Welle 26 rechtwinklig schneidet, ohne daß letzteres eine Zwangsbedingung darstellt. Wenn es sich bei dem Getriebegehäuseteil 31 um ein Gußteil handelt, ist der Führungsbolzen 47 an diesem Gußteil vorzugsweise angegossen.

Wenn im Betrieb der Motor 22 eingeschaltet wird und dadurch der Exzenter 42 zu einer Drehbewegung um die Achse 50 veranlaßt wird, führt das Innenrad 43 eine hin- und hergehende Bewegung entlang der Verstellachse 49 aus, der eine Taumelbewegung um den Führungsbolzen 47 überlagert ist. Dadurch wird das das Nockenrad 39 bildende Außenrad 44 zu einer Drehbewegung um die Achse 50 veranlaßt, die gegenüber der Drehbewegung des Schneckenrades 25 in einem Verhältnis untersetzt ist, das von den Zähnezahlen der Verzahnungen 46 und 45 von Innenrad 43 und Außenrad 44 abhängt. Die vorzugsweise als Mikroschalter ausgeführten Schalter 33 und 34 werden mit großer Schaltsicherheit besonders geräuscharm betätigt.

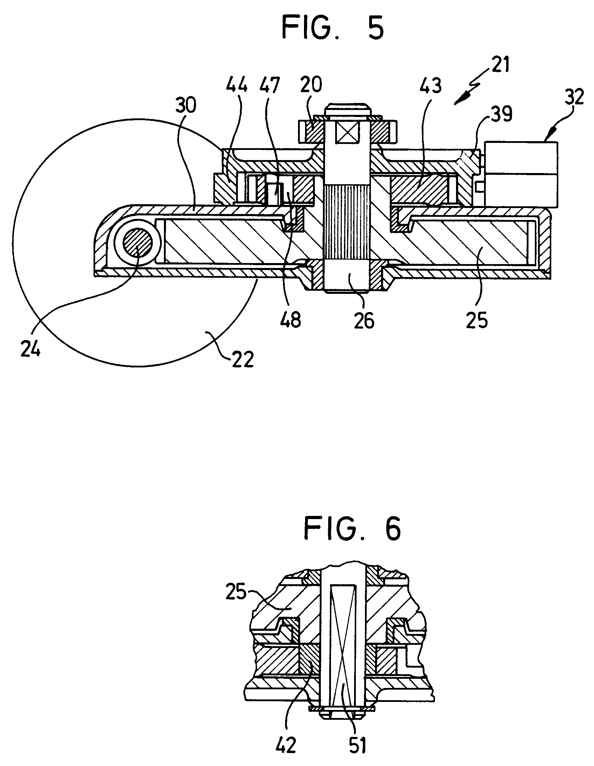

Während bei der Ausführungsform gemäß den Fign. 3 und 4 das Exzenterzahnrädergetriebe 40 an der von dem Antriebsritzel 20 abgewendeten Seite des Schneckenrades 25 angeordnet ist, befindet sich bei der abgewandelten Ausführungsform gemäß Fig. 5 das Exzenterzahnrädergetriebe 40 in Axialrichtung zwischen dem Antriebsritzel 20 und dem Schneckenrad 25. Dementsprechend ist der Führungsbolzen 47 an dem Getriebegehäuseteil 30 angebracht, beispielsweise angegossen.

Fig. 6 zeigt eine Lösung entsprechend den Fign. 3 und 4, wobei jedoch der Exzenter 42 als von dem Schneckenrad 25 getrenntes Bauteil ausgebildet ist. Das Schneckenrad 25 und der Exzenter 42 sind dabei mit der Welle 26 über einen Keil 51 drehfest verbunden.

Im Rahmen der Erfindung sind weitere Abwandlungen möglich. Beispielsweise lassen sich der Führungsbolzen 47 und die Radialausnehmung 48 derart vertauschen, daß der Führungsbolzen 47 mit dem Innenrad 43 fest verbunden und die Radialausnehmung 48 in dem Getriebegehäuseteil 31 (Fig. 4) bzw. 30 (Fig. 5) ausgebildet wird. Das Nockenrad 39 kann gegebenenfalls mit weiteren Nockenbahnen ausgestattet sein, die mit zusätzlichen Schaltern der Schalteinrichtung 32 zusammenwirken. Die Schalter 33, 34 der Schalteinrichtung 32 brauchen auch nicht, wie in den Fign. 3, 4 und 5 dargestellt, übereinander angeordnet sein, sondern sie können in Umfangsrichtung des Nockenrades 39 in Abstand voneinander liegen.

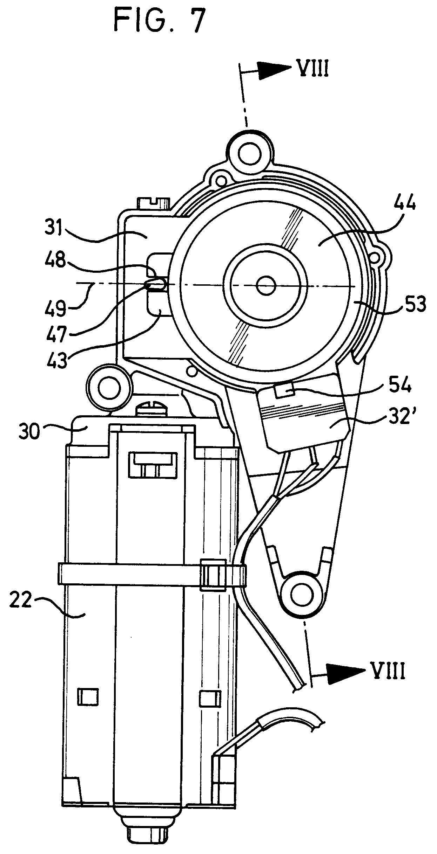

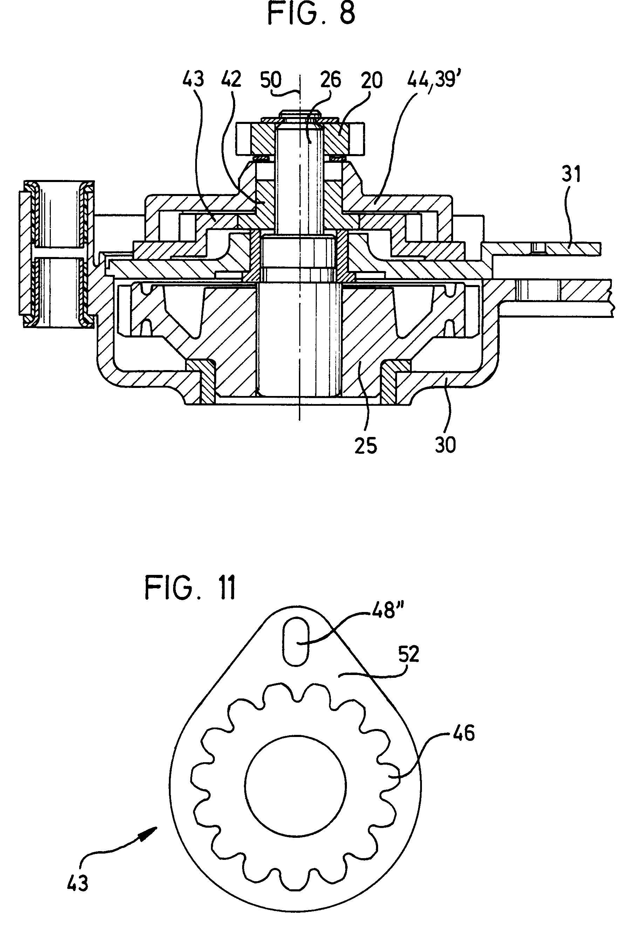

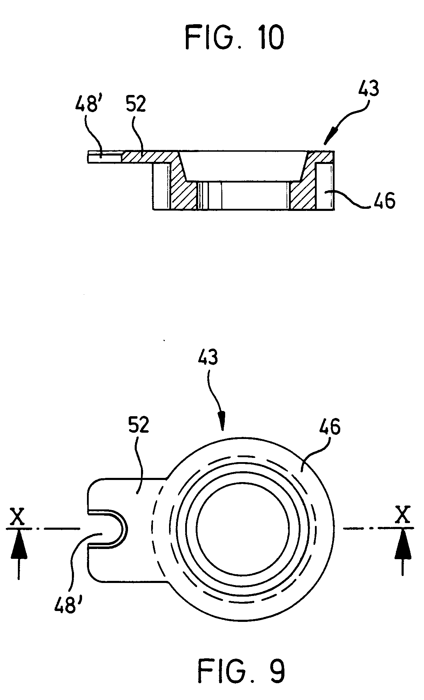

Bei der abgewandelten Ausführungsform gemäß den Fig. 7-10 ist die Radialausnehmung 48' nicht radial innerhalb, sondern radial außerhalb der Außenverzahnung 46 als radial nach außen offener Schlitz angeordnet. An dem Innenrad 43 ist für diesen Zweck ein die Radialausnehmung 48' aufweisendes, über die Außenverzahnung 46 radial nach außen vorspringendes Teil 52 einstückig angeformt. Das selbst das Schaltrad 39' bildende Außenrad 44 des Exzenterzahnrädergetriebes 40 trägt mindestens einen Dauermagneten 53, beispielsweise in Form eines Magnetringes, der derart magnetisiert ist, daß er mit mindestens einem stationär angeordneten magnetfeldempfindlichen Sensor 54, insbesondere einem Hall- Sensor, zusammenwirkt, um die Schalteinrichtung 32' in vorbestimmter Winkelstellung des Schaltrades 39' zu betätigen. Zum Erfassen mehrerer Winkelstellungen können entsprechend mehrere Magnete und zugeordnete Hall- Sensoren vorgesehen sein.

Auch im Falle der Ausführungsform der Fig. 11 ist mit dem Innenrad 43 ein Teil 52 einstückig verbunden, das über die Außenverzahnung 46 radial nach außen vorspringt. In diesem Teil 52 ist radial außerhalb der Außenverzahnung 46 die Radialausnehmung 48'' in Form eines Langloches ausgebildet.

Während die Erfindung anhand eines Fahrzeug-Schiebedaches erläutert ist, eignet sich die Antriebsvorrichtung auch für Hebedächer, Schiebehebedächer, Spoilerdächer, Lüfterdächer, Lamellendächer und dergleichen. Daneben läßt sich die Antriebsvorrichtung aber auch in Verbindung mit Fensterhebern, Sitzen oder anderen verstellbaren Fahrzeugteilen einsetzen.

## Patentansprüche

1. Antriebsvorrichtung (21) für ein zwischen Endstellungen verstellbares Teil (10) eines Fahrzeugs, insbesondere für den Deckel eines Fahrzeugdaches, mit einem Elektromotor (22), der über ein Untersetzungsgetriebe (23) mit einem auf einer Abtriebswelle (26) sitzenden Antriebsritzel (20) verbunden ist, das seinerseits mit dem verstellbaren Teil (10) in Antriebsverbindung steht, sowie mit einer den Motor (22) steuernden Schalteinrichtung (32) zum Stillsetzen des Motors (22) in mindestens einer vorbestimmten Stellung des verstellbaren Teils, wobei zum Betätigen der Schalteinrichtung (32) ein Schaltrad (39') vorgesehen ist, das beim Verstellen des Teils zwischen seinen Endstellungen über ein Exzenterzahnrädergetriebe (40) zu einer Drehbewegung von weniger als 360° veranlaßt wird, und wobei das Exzenterzahnrädergetriebe (40) ein Außenrad (44) mit einer zu einer gemeinsamen Welle (26) von Untersetzungs- (23) und Exzenterzahnrädergetriebe (40) koaxialen Innenverzahnung und ein damit in Kämmeingriff stehendes außenverzahntes Innenrad (43) aufweist, das mindestens einen Zahn weniger als das Außenrad (44) hat und das auf einem mit der Welle (26) drehfest verbundenen Exzenter (42) für eine relative Drehbewegung zwischen Innenrad (43) und Exzenter (42) gelagert ist, **dadurch** **gekennzeichnet**, daß das Innenrad (43) an einer Umlaufbewegung gegenüber dem Außenrad (44) gehindert und entlang einer die Achse (50) der Welle (26) vorzugsweise rechtwinklig schneidenden Verstellachse (49) hin- und herverstellbar geführt ist, sowie daß das Außenrad (44) mit dem Schaltrad (39, 39') drehfest verbunden ist.

2. Antriebsvorrichtung nach Anspruch 1, dadurch gekennzeichnet, daß das Außenrad (44) selbst das Schaltrad (39, 39') bildet.

3. Antriebsvorrichtung nach einem der vorhergehenden Ansprüche, dadurch gekennzeichnet, daß zur Führung des Innenrades (43) mindestens ein feststehender Führungsbolzen (47) vorgesehen ist, der in eine Radialausnehmung (48, 48', 48'') des Innenrades (43) verschiebbar eingreift.

4. Antriebsvorrichtung nach Anspruch 3, dadurch gekennzeichnet, daß die Radialausnehmung (48) radial innerhalb der Verzahnung (46) des Innenrades (43) ausgebildet ist.

5. Antriebsvorrichtung nach Anspruch 3, dadurch gekennzeichnet, daß die Radialausnehmung (48', 48'') in einem über die Verzahnung (46) des Innenrades (43) radial nach außen vorspringenden Teil (52) des Innenrades ausgebildet ist.

6. Antriebsvorrichtung nach Anspruch 5, dadurch gekennzeichnet, daß die Radialausnehmung (48'') als Langloch ausgebildet ist.

7. Antriebsvorrichtung nach Anspruch 5, dadurch gekennzeichnet, daß die Radialausnehmung (48',) als radial nach außen offener Schlitz ausgebildet ist.

8. Antriebsvorrichtung nach einem der vorhergehenden Ansprüche, dadurch gekennzeichnet, daß die Zahl der Zähne des Außenrades (44) genau um Eins größer als die Zahl der Zähne des Innenrades (43) ist.

9. Antriebsvorrichtung nach einem der Ansprüche 3 bis 8, dadurch gekennzeichnet, daß der Führungsbolzen (47) an einem Getriebegehäuseteil (31 oder 30) angebracht ist.

10. Antriebsvorrichtung nach Anspruch 9, dadurch gekennzeichnet, daß das Getriebegehäuseteil (31 oder 30) ein Gußteil ist, an welchem der Führungsbolzen (47) angegossen ist.

11. Antriebsvorrichtung nach einem der vorhergehenden Ansprüche, dadurch gekennzeichnet, daß das Untersetzungsgetriebe (23) eine von dem Motor (22) angetriebene Schneckenwelle (24) und ein damit kämmendes Schneckenrad (25) aufweist, das auf der gemeinsamen Welle (26) von Untersetzungs- und Exzenterzahnrädergetriebe (23, 40) sitzt und mit dieser Welle drehfest verbunden ist.

12. Antriebsvorrichtung nach Anspruch 11, dadurch gekennzeichnet, daß der Exzenter (42) und das Schneckenrad (25) einstückig miteinander verbunden sind.

13. Antriebsvorrichtung nach einem der vorhergehenden Ansprüche, dadurch gekennzeichnet, daß die gemeinsame Welle (26) von Untersetzungs- und Exzenterzahnrädergetriebe (23, 40) zugleich die das Antriebsritzel (20) tragende Abtriebswelle bildet.

14. Antriebsvorrichtung nach einem der vorhergehenden Ansprüche, dadurch gekennzeichnet, daß das Schaltrad (39) als Nockenrad ausgebildet ist.

15. Antriebsvorrichtung nach Anspruch 14, dadurch gekennzeichnet, daß das Nockenrad (39) mit mehreren in Axialrichtung gegeneinander versetzten Nockenbahnen (37, 38) versehen ist, von denen jede mit jeweils einem Schalter (33, 34) der Schalteinrichtung (32) zusammenwirkt.

16. Antriebsvorrichtung nach einem der Ansprüche 1 bis 13, dadurch gekennzeichnet, daß das Schaltrad (39') mindestens einen Dauermagneten (53) trägt, der zum Betätigen der Schalteinrichtung (32') mit mindestens einem magnetfeldempfindlichen Sensor (54) zusammenwirkt.

17. Antriebsvorrichtung nach einem der vorhergehenden Ansprüche, dadurch gekennzeichnet, daß Innen- und Außenrad (43, 44) aus Werkstoffen mit mindestens näherungsweise gleichen Wärmeausdehnungskoeffizienten gefertigt sind.

## Claims

1. A drive device (21) for a part (10) of a vehicle adjustable between extreme positions, particularly for the cover of a vehicle roof, with an electric motor (22) connected via a reduction gear (23) to a driving pinion (20) seated on a drive shaft (26) and which is in turn connected for drive to the adjustable part (10) and with, controlling the motor (22), a switching device (32) for stopping the motor (22) in at least one predetermined position of the adjustable part, wherein to actuate the switching device (32) a switch wheel (39, 39') is provided which upon adjustment of the part between its extreme positions is caused by an eccentric gear train (40) to perform a rotary movement through less than 360° and wherein the eccentric gear train (40) has an external gear (44) with internal teeth coaxial with a common shaft (26) of the reduction gear (23) and the eccentric gear train (40) and an externally toothed internal gear (43) which meshes with the said internally cut tooth system and has at least one fewer tooth than the external gear (44) and which is mounted on an eccentric disc (42) which is connected to the shaft (26) in a manner permitting relative rotation between the internal gear (43) and the eccentric disc (42), characterised in that the internal gear (43) is prevented from performing a rotary movement in relation to the external gear (44) and is guided for reciprocating displacement along an adjustment axis (49) which preferably intersects the axis (50) of the shaft (26) at right-angles, and in that the external gear (44) is rotationally rigidly connected to the switch wheel (39, 39').

2. A drive device according to Claim 1, characterised in that the external gear (44) itself constitutes the switch wheel (39, 39').

3. A drive device according to one of the preceding Claims, characterised in that for guiding the internal gear (43) at least one fixed guide bolt (47) is provided which engages displaceably a radial recess (48, 48', 48'') in the internal gear (43).

4. A drive device according to Claim 3, characterised in that the radial recess (48) is constructed radially within the tooth system (46) of the internal gear (43).

5. A drive device according to Claim 3, characterised in that the radial recess (48', 48'') is constructed in a part (52) of the internal gear which projects radially outwardly beyond the tooth system (46) of the internal gear (43).

6. A drive device according to Claim 5, characterised in that the radial recess (48'') is constructed as an elongate hole.

7. A drive device according to Claim 5, characterised in that the radial recess (48') is constructed as a radially outwardly open slot.

8. A drive device according to one of the preceding Claims, characterised in that the number of teeth of the external gear (44) is exactly one more than the number of teeth on the internal gear (43).

9. A drive device according to one of Claims 3 to 8, characterised in that the guide bolt (47) is mounted on a transmission housing part (31 or 30).

10. A drive device according to Claim 9, characterised in that the transmission housing part (31 or 30) is a casting on which the guide bolt (47) is integrally cast.

11. A drive device according to one of the preceding Claims, characterised in that the reduction gear (23) comprises a worm shaft (24) driven by the motor (22) and, meshing therewith, a worm wheel (25) seated on and rotationally rigidly connected to the common shaft (26) of the reduction gear and the eccentric gear train (23, 40).

12. A drive device according to Claim 11, characterised in that the eccentric disc (42) and the worm wheel (25) are connected to each other in one piece.

13. A drive device according to one of the preceding Claims, characterised in that the common shaft (26) of the reduction gear and the eccentric gear train (23, 40) forms at the same time the drive shaft which carries the driving pinion (20).

14. A drive device according to one of the preceding Claims, characterised in that the switch wheel (39) is constructed as a cam wheel.

15. A drive device according to Claim 14, characterised in that the cam wheel (39) is provided with a plurality of axially mutually offset cam tracks (37, 38) each of which cooperates with in each case a switch (33, 34) on the switching device (32).

16. A drive device according to one of Claims 1 to 13, characterised in that the switch wheel (39') carries at least one permanent magnet (53) which for actuation of the switching device (32') cooperates with at least one magnetic field sensitive sensor (54).

17. A drive device according to one of the preceding Claims, characterised in that internal and external gear (43, 44) are made from materials having at least approximately the same coefficients of heat expansion.

## Revendications

1. Dispositif d'entraînement (21) pour une partie (10) d'un véhicule pouvant se déplacer entre des positions terminales, en particulier pour le couvercle d'un toit de véhicule, avec un moteur électrique (22) qui est relié par un réducteur (23) à un pignon d'entraînement (20) calé sur un arbre de sortie (26), pignon qui, de son côté, est en liaison d'entraînement avec la partie mobile (10), ainsi qu'avec un dispositif de commutation (32) commandant le moteur (22) pour arrêter le moteur (22) dans au moins une position prédéterminée de la partie mobile, dispositif d'entraînement dans lequel on prévoit pour actionner le dispositif de commutation (32) un volant de commande (39) auquel on peut faire exécuter un mouvement de rotation de moins de 360° lors du déplacement de la partie entre ses positions terminales au moyen d'une transmission à engrenages à excentrique (40) et la transmission à engrenages à excentrique (40) présente une roue externe (44) avec une denture interne coaxiale à l'arbre commun (26) du réducteur (23) et de la transmission à engrenages à excentrique (40) et présente une roue interne (43) à denture externe engrenant avec, qui a au moins une dent de moins que la roue externe (44) et qui est montée sur un excentrique (42) relié de façon solidaire en rotation à l'arbre (26), pour obtenir un mouvement de rotation relatif entre la roue interne (43) et l'excentrique (42), dispositif d'entraînement, caractérisé en ce que la roue interne (43) est empêchée d'exécuter un mouvement de révolution par rapport à la roue externe (44) et est guidée de façon à aller et venir le long d'un axe de déplacement (49) recoupant l'axe (50) de l'arbre (26) de préférence à angle droit et en ce que la roue externe (44) est reliée de façon solidaire en rotation au volant de commande (39, 39').

2. Dispositif d'entraînement selon la revendication 1, caractérisé en ce que la roue externe (44) constitue elle-même le volant de commande (39, 39').

3. Dispositif d'entraînement selon l'une des revendications précédentes, caractérisé en ce que pour guider la roue interne (43), on prévoit au moins un boulon fixe de guidage (47), qui vient en prise de façon à coulisser dans un évidement radial (48, 48', 48'') de la roue interne (43).

4. Dispositif d'entraînement selon la revendication 3, caractérisé en ce que l'évidement radial (48) est constitué à l'intérieur de la denture (46) de la roue interne (43).

5. Dispositif d'entraînement selon la revendication 3, caractérisé en ce que l'évidement radial (48', 48'') est constitué dans une partie (52) de la roue interne qui fait saillie radialement vers l'extérieur au-delà de la denture (46) de la roue interne (43).

6. Dispositif d'entraînement selon la revendication 5, caractérisé en ce que l'évidement radial (48'') est constitué comme un trou oblong.

7. Dispositif d'entraînement selon la revendication 5, caractérisé en ce que l'évidement radial (48') est constitué comme une fente ouverte radialement vers l'extérieur.

8. Dispositif d'entraînement selon l'une des revendications précédentes, caractérisé en ce que le nombre des dents de la roue externe (44) est exactement plus grand d'une unité que le nombre des dents de la roue interne (43).

9. Dispositif d'entraînement selon l'une des revendications 3 à 8, caractérisé en ce que le boulon de guidage (47) est disposé sur une partie (31 ou 30) du boîtier de transmission.

10. Dispositif d'entraînement selon la revendication 9, caractérisé en ce que la partie (31 ou 30) du boîtier de transmission est une pièce de fonderie, sur laquelle le boulon de guidage (45) est coulé.

11. Dispositif d'entraînement selon l'une des revendications précédentes, caractérisé en ce que le réducteur (23) présente une vis sans fin (24) entraînée par le moteur (22) et une roue tangente (25) engrenant avec, qui est calée sur l'arbre commun (26) du réducteur et de la transmission à engrenages à excentrique (23, 40) et est reliée de façon solidaire en rotation à cet arbre.

12. Dispositif d'entraînement selon la revendication 11, caractérisé en ce que l'excentrique (42) et la roue tangente (25) sont reliés ensemble d'une seule pièce.

13. Dispositif d'entraînement selon l'une des revendications précédentes, caractérisé en ce que l'arbre commun (26) du réducteur et de la transmission à engrenages à excentrique (23, 40) constitue en même temps l'arbre de sortie portant le pignon d'entraînement (20).

14. Dispositif d'entraînement selon l'une des revendications précédentes, caractérisé en ce que le volant de commande (39) est constitué comme un pignon de distribution.

15. Dispositif d'entraînement selon la revendication 14, caractérisé en ce que le pignon de distribution (39) est pourvu de plusieurs pistes de came (37, 38) décalées dans le sens axial les unes par rapport aux autres, chacune d'entre elles coopérant avec respectivement un commutateur (33, 34) du dispositif de commutation (32).

16. Dispositif d'entraînement selon l'une des revendications 1 à 13, caractérisé en ce que le volant de commutation (39') porte au moins un aimant permanent (53) qui coopère pour actionner le dispositif de commutation (32') avec au moins un détecteur (54) sensible aux champs magnétiques.

17. Dispositif d'entraînement selon l'une des revendications précédentes, caractérisé en ce que la roue interne et la roue externe (43, 44) sont fabriquées en des matières ayant des coefficients de dilatation égaux au moins de façon approchée.
